# EUROPEAN PATENT APPLICATION

(11) **EP 4 603 335 A1**
(43) Date of publication of application: **20.08.2025**
(21) Application number: 23877069.7
(22) Date of filing: 13.09.2023
(51) Int. Cl.: B60R 1/12, B60R 1/04, B60R 11/02

(54) **INNER MIRROR STRUCTURE WITH BUILT-IN CAMERA**

(30) Priority: 11.10.2022 JP 2022163185
(71) Applicant: Murakami Corporation, Shizuoka 420-8550 (JP)
(72) Inventor: SHIRATORI Hidehiro, Shizuoka-shi, Shizuoka 420-8550 (JP)
(74) Representative: Müller-Boré & Partner Patentanwälte PartG mbB
(86) International application number: PCT/JP2023/033364
(87) International publication number: WO 2024/080063

(57) **Abstract**

[Problem to be Solved]

To make a ghost image that is caused by a step place between a lens and a back plate and is included in a ghost inconspicuous, the ghost being caused by an image of an internal structure of an inner mirror and occurring in a captured image of an infrared camera when strong external light passes through a mirror element and is applied to the internal structure, in a configuration in which the optical axis of the infrared camera is disposed tilted relative to the normal direction of the plate face of the mirror element. This achieves improvement in the visibility of the captured image, improvement in the recognition accuracy of the captured image based on image recognition processing, or the like.

[Solution]

A flat surface portion 77a and a recessed surface portion 77b are formed on a back plate 76 disposed behind a mirror element 78. At least a part of a lens exposure opening 82 is formed in an inclined surface of the recessed surface portion 77b, the inclined surface being inclined relative to the flat surface portion 77a. A lens 72 of an infrared camera 64 is disposed with an optical axis L1 titled relative to the normal direction of the flat surface portion 77a, following the lens exposure opening 82.

## Description

### Technical Field

The invention relates to a structure of an inner mirror with a built-in camera in which an infrared camera is disposed behind a mirror element that reflects visible light and transmits infrared light. In particular, the invention makes a ghost of an internal structure of the inner mirror inconspicuous, the ghost occurring in a captured image of the infrared camera, thereby achieving improvement in the visibility of the captured image, improvement in the recognition accuracy of the captured image based on image recognition processing on the captured image, or the like.

### Background Art

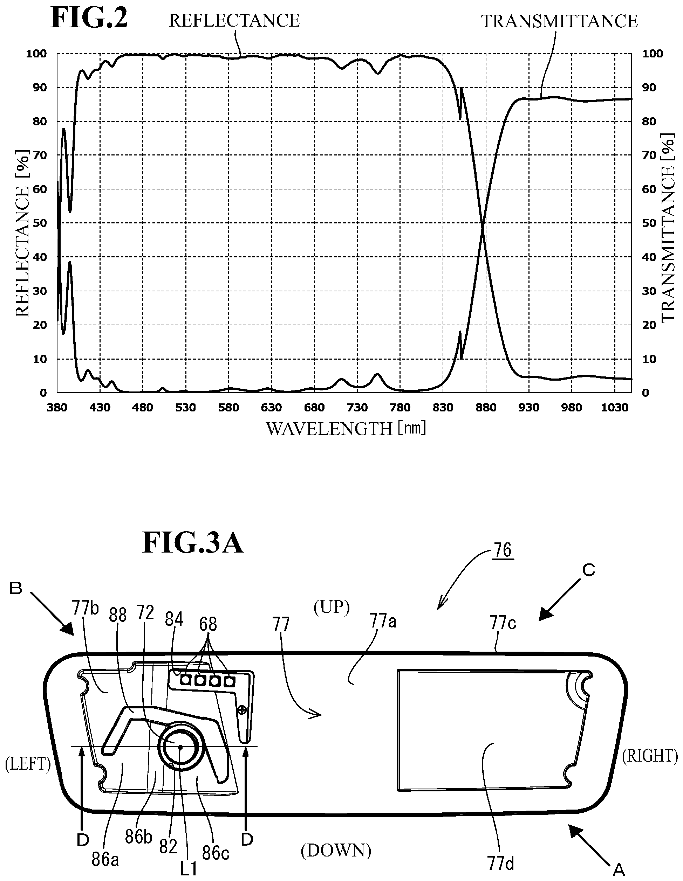

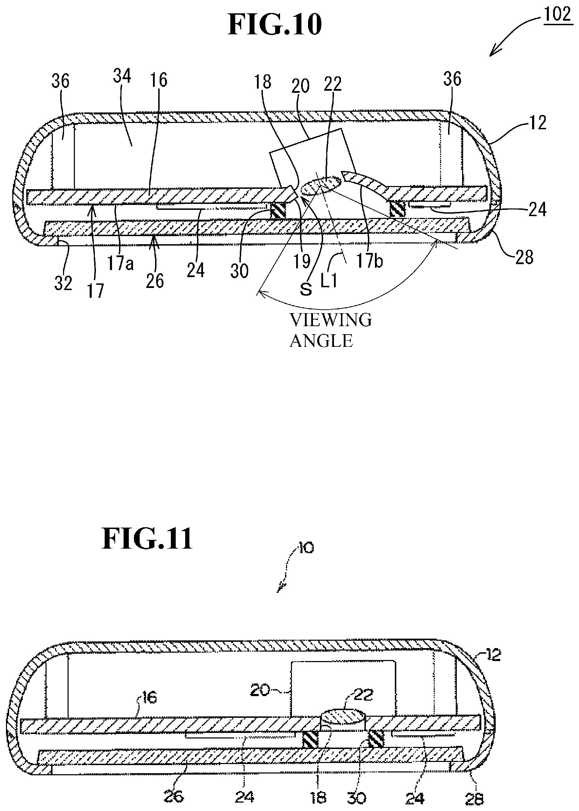

Various techniques have been proposed in which a mirror element that reflects visible light and transmits infrared light is used, an infrared camera is disposed behind the mirror element, and an image inside a vehicle illuminated by an infrared lighting device is transmitted through the mirror element and captured by the infrared camera to monitor the state of a driver, a rear seat (or the rear seat and behind the vehicle), or the like. For example, in Patent Literature 1 described below, an inner mirror with a built-in camera that is configured to be able to monitor the state of a driver is proposed. Figure 11 shows the inner mirror with a built-in camera shown in Figure 2 (partially corrected) of Patent Literature 1. In an inner mirror 10, a mirror element 26 that reflects visible light and transmits infrared light is disposed at an opening of the front face of a housing 12 in a state in which the mirror element 26 is held on a ring 28 attached to the front face of the housing 12. A substrate 16 is installed facing the back face of the mirror element 26 in an internal space of the housing 12. An infrared camera 20 is mounted on the back face of the substrate 16, and an infrared lighting device 24 using infrared LEDs is mounted on the front face of the substrate 16. A lens 22 of the infrared camera 20 is exposed through a lens exposure opening 18 formed in the substrate 16 and faces the back face of the mirror element 26. Infrared light emitted from the infrared lighting device 24 passes through the mirror element 26 and is applied to the face of the driver. An image of the face of the driver illuminated by the infrared light passes through the mirror element 26 and is captured by the infrared camera 20. The state of the driver is monitored based on the captured image of the infrared camera 20. In this inner mirror 10, a light-shielding member 30 is disposed between the infrared lighting device 24 and the lens 22 to prevent a flare (white blur) in the captured image, the flare being caused by the infrared light emitted from the infrared lighting device 24 entering the lens 22 of the infrared camera 20 directly or by being reflected by the mirror element 26.

### Citation List

### Patent Literature

Patent Literature 1: Japanese Patent Laid-Open No. 2004-136760

### Summary of Invention

### Technical Problem

In an inner mirror with a built-in camera, there are cases in which a camera optical axis is disposed tilted relative to the normal direction of a plate face of a mirror element in order to capture an object to be monitored at a center position of the field of view of the camera. That is, when a camera image is used for monitoring the state of the rear seat (or the rear seat and behind the vehicle), in the left-right direction, the camera optical axis is disposed tilted to the side opposite to the driver's side (in the left direction in the case of a right-hand drive vehicle) relative to the normal direction of the plate face of the mirror element. In addition, when the camera image is used for monitoring the state of the driver, in the left-right direction, the camera optical axis is disposed tilted to the driver's side (in the right direction in the case of a right-hand drive vehicle) relative to the normal direction of the plate face of the mirror element. In addition, also in the up-down direction, there are cases in which the camera optical axis is disposed tilted downward relative to the normal direction of the plate face of the mirror element.

In the inner mirror 10 described in Patent Literature 1, the optical axis of the infrared camera 20 is disposed facing in the normal direction of the plate face of the mirror element 26. According to the experiment of the present inventor, it was found that a problem may occur when the optical axis of the infrared camera 20 is disposed tilted relative to the normal direction of the plate face of the mirror element 26. That is, when the optical axis of the infrared camera 20 is tilted, for example, in the left-right direction, the lens 22 is also inevitably tilted in the same direction, and the lens 22 is thus positioned at an angle relative to the plate face of the substrate 16. As a result, a step between at least one of left and right edges of the lens 22 and the front face of the substrate 16 adjacent to the edge becomes larger than that in a case without the tilt. On the other hand, when strong external light (external light including infrared light), such as light of headlights of a vehicle in the back or sunlight at a low position in the morning or evening, passes through the mirror element 26 and enters the inside of the inner mirror 10, an image of an internal structure of the inner mirror 10 illuminated by the external light is reflected by the back face of the mirror element 26 and captured by the infrared camera 20, which causes a ghost in the captured image. In particular, when the step between the lens 22 and the substrate 16 becomes large as a result of the optical axis of the infrared camera 20 being tilted, a ghost image caused by the step place becomes conspicuous in the ghost that is caused by the internal structure of the inner mirror 10 and occurs in the captured image of the infrared camera 20. As a result, in a use in which the captured image of the infrared camera 20 is displayed on a display to allow the driver or the like to visually recognize the captured image (e.g., in a use in which the driver or the like monitors the state of the rear seat or behind the vehicle), the visibility of the captured image may be reduced. In addition, in a use in which the captured image of the infrared camera 20 is subjected to image recognition processing to perform automatic monitoring (e.g., in a use in which drowsy driving of the driver is monitored), the recognition accuracy may be reduced. For such problems, when the infrared camera 20 is tilted together with the substrate 16, the step between the lens 22 and the substrate 16 does not become large, and it is thus possible to restrain the ghost image that is caused by the step place and is included in the ghost from becoming conspicuous. However, when the substrate 16 is tilted, the dimension of the inner mirror 10 in the front-back direction (thickness direction) becomes large due to the tilted arrangement of the substrate 16. In addition, in a configuration in which the infrared lighting device 24 is disposed on the substrate 16 and emits infrared light toward the mirror element 26 as in the inner mirror 10 described in Patent Literature 1, when the substrate 16 is tilted, a gap between the mirror element 26 and the substrate 16 expands on one of the left and right sides of the inner mirror 10, which makes it difficult for the light-shielding member 30 to block the infrared light emitted from the infrared lighting device 24.

The invention is intended to solve the problem of a ghost that is caused by an image of an internal structure of an inner mirror and occurs in a captured image of an infrared camera when strong external light passes through a mirror element and is applied to the internal structure, in a configuration in which the optical axis of the infrared camera is disposed tilted relative to the normal direction of the plate face of the mirror element. That is, the invention makes it possible to restrain a ghost image caused by a step place between a lens and a back plate (e.g., a mirror holder, a substrate, or a plate that covers the internal structure of the inner mirror) that is disposed facing the back face of the mirror element behind the mirror element, the ghost image being included in the ghost, from becoming conspicuous without tilting the entire back plate. In this way, the invention provides an inner mirror structure with a built-in camera that achieves improvement in the visibility of the captured image, improvement in the recognition accuracy of the captured image based on image recognition processing on the captured image, or the like.

### Solution to Problem

The invention includes: a housing; a mirror element that has optical characteristics of reflecting visible light and transmitting infrared light, and is disposed at a position where the mirror element closes an opening of a front face of the housing; a back plate that is housed in an internal space of the housing surrounded by the housing and the mirror element, and is disposed facing a back face of the mirror element behind the mirror element; and an infrared camera that is disposed at a position behind the back plate in the internal space of the housing, has a lens exposed toward the back face of the mirror element through a lens exposure opening formed in the back plate, and receives infrared light that passes through the mirror element and enters the infrared camera, in which a front face of the back plate has a flat surface portion disposed parallel to a plate face of the mirror element (e.g., a front face or the back face of the mirror element, or an intermediate face therebetween), and a recessed surface portion recessed relative to the flat surface portion, at least a part of the lens exposure opening is formed in an inclined surface of the recessed surface portion, the inclined surface being inclined relative to the flat surface portion, and the lens of the infrared camera is disposed with an optical axis tilted relative to a normal direction of the flat surface portion, following the lens exposure opening. Note that, in the invention, the case in which the plate face of the mirror element and the flat surface portion are disposed parallel to each other is not limited to a case in which the plate face of the mirror element and the flat surface portion are disposed exactly parallel to each other and includes a case in which the plate face of the mirror element and the flat surface portion are disposed substantially parallel to each other. In addition, in the invention, the tilt direction of the optical axis of the lens relative to the normal direction of the flat surface portion is not limited to both the up-down and left-right directions of the plate face of the mirror element of the inner mirror, and may be any one of the directions.

The invention makes it possible to tilt the optical axis of the infrared camera relative to the normal direction of the plate face of the mirror element while restraining the step between the lens of the infrared camera and the back plate from becoming large without tilting the entire back plate relative to the mirror element. Thus, while restraining an increase in the dimension of the inner mirror in the front-back direction, it is possible to restrain a ghost image that is caused by the step place between the lens and the back plate and is included in a ghost from becoming conspicuous, the ghost being caused by an image of the internal structure of the inner mirror and occurring in the captured image of the infrared camera due to strong external light. As a result, it is possible to obtain an effect such as improvement in the visibility of the captured image or improvement in the recognition accuracy of the captured image based on image recognition processing on the captured image.

In the invention, the back plate may have a configuration in which an entire circumference of the recessed surface portion is surrounded by the flat surface portion. Accordingly, since the entire circumference of the recessed surface portion is surrounded by the flat surface portion, warping and bending of the back plate caused by the recessed surface portion can be restrained. In addition, when the mirror element is configured to be disposed in intimate contact with the flat surface portion, the mirror element can close the entire circumference of the outer peripheral edge of the recessed surface portion, and the entry of dirt, dust, and the like into the recessed surface portion can be restrained.

In the invention, the back plate may be configured as a component in which the flat surface portion and the recessed surface portion are integrally formed. This reduces the number of components compared to a case in which the flat surface portion and the recessed surface portion are configured as separate components and makes it easy to assemble the back plate to the inner mirror.

In the invention, the back plate may be configured as a combination of the flat surface portion and the recessed surface portion that are separate components. Accordingly, when a plurality of back plates including recessed surface portions having different shapes is prepared, it is possible to combine components having a common flat surface portion and components having different recessed surface portions to constitute the back plates. In addition, in this case, a component constituting the recessed surface portion may be integrated with a component constituting a front part of a case of the infrared camera. This makes it possible to reduce the number of components compared to a case in which the component constituting the recessed surface portion and the component constituting the front part of the case of the infrared camera are configured as separate components. Note that the component having the flat surface portion and the component having the recessed surface portion may be left uncoupled to each other or may be coupled to each other with an adhesive, paint, or the like in a state assembled to the inner mirror.

The back plate may constitute, for example, a mirror holder that holds the mirror element. In this case, the mirror element and the mirror holder may be joined to each other at the flat surface portion. In addition, the back plate may constitute a substrate on which the infrared camera is mounted, and the substrate may not constitute a mirror holder that holds the mirror element. In addition, the back plate may constitute a plate that covers the internal structure of the inner mirror.

The back plate may be formed of, for example, plastic, reinforced plastic, or metal. The front face of the back plate may have a dark color (e.g., black or dark gray).

The invention may further include an infrared lighting device that is housed in the internal space of the housing and emits infrared light toward the back face of the mirror element to allow the infrared light to pass through the mirror element and radiate into an external space of the housing. For example, the infrared lighting device may be disposed behind the back plate and may emit toward the back face of the mirror element through an irradiation window formed in the back plate, or may be mounted on the front face of the back plate and may emit toward the back face of the mirror element.

### Brief Description of Drawings

[Figure 1] Figure 1 is an exploded perspective view of an inner mirror with a built-in camera according to Embodiment 1 of the invention.
[Figure 2] Figure 2 is a diagram showing an example of the spectral characteristics of a mirror element in Figure 1.
[Figure 3A] Figure 3A is a front view of a mirror holder in Figure 1, showing the arrangement of a lens of an infrared camera and infrared LEDs together.
[Figure 3B] Figure 3B is a perspective view of the mirror holder in Figure 1, viewed from the vicinity of a position indicated by arrow A in Figure 3A.
[Figure 3C] Figure 3C is a perspective view of the mirror holder in Figure 1, viewed from the vicinity of a position indicated by arrow B in Figure 3A.
[Figure 3D] Figure 3D is a perspective view of the mirror holder in Figure 1, viewed from the vicinity of a position indicated by arrow C in Figure 3A.
[Figure 4] Figure 4 is an end view of the inner mirror with a built-in camera of Figure 1 in an assembled state, cut at a D-D arrow position of Figure 3A.
[Figure 5A] Figure 5A is a front view of the inner mirror with a built-in camera of Figure 1 in an assembled state.
[Figure 5B] Figure 5B is a sectional end view at an E-E arrow position of Figure 5A.
[Figure 5C] Figure 5C is a sectional end view (shown in an enlarged manner) at an F-F arrow position of Figure 5A.
[Figure 6A] Figure 6A is a photograph showing a captured image of the built-in infrared camera in the inner mirror with a built-in camera according to Embodiment 1 of the invention when external light of a halogen lamp is applied to the inner mirror from the front thereof.
[Figure 6B] Figure 6B is a photograph showing a captured image of the built-in infrared camera in a comparative example in which the recessed surface portion of the front face of the mirror holder of the inner mirror with a built-in camera according to Embodiment 1 of the invention has been made to be a box shape throughout the entire circumference (the shape that has no inclined surface and has a bottom surface entirely formed of a flat surface parallel to a flat surface portion) when external light of the halogen lamp is applied to the inner mirror from the front thereof.
[Figure 7] Figure 7 is an exploded perspective view of an inner mirror with a built-in camera according to Embodiment 2 of the invention.
[Figure 8] Figure 8 is an end view of the inner mirror with a built-in camera of Figure 7 in an assembled state, cut at a position corresponding to the cut position of the end view of Figure 4.
[Figure 9] Figure 9 is an exploded perspective view of an inner mirror with a built-in camera according to Embodiment 3 of the invention.
[Figure 10] Figure 10 is a plan end view showing a cross section of an inner mirror with a built-in camera according to Embodiment 4 of the invention.
[Figure 11] Figure 11 is a plan end view (partially corrected) showing a cross section of an inner mirror with a built-in camera shown in Figure 2 of Patent Literature 1.

### Description of Embodiments

Hereinbelow, embodiments of the invention will be described. In the following embodiments, each of the up, down, left, and right directions with respect to an inner mirror with a built-in camera (hereinbelow, referred to as the "inner mirror") and its components indicates the corresponding direction when a mirror surface of the inner mirror mounted on a vehicle is viewed from the front. That is, each of the up, down, left, and right directions of the inner mirror and its components is represented by each of the up, down, left, and right directions with respect to the inner mirror and its components when the mirror surface of the inner mirror mounted on the vehicle is viewed from the front. In addition, with respect to the inner mirror and its components, the "front face" refers to a face that faces the viewpoint side when the mirror surface of the inner mirror is viewed from the front, and the "back face" refers to a face that faces the opposite side of the viewpoint side.

### <<Embodiment 1>>

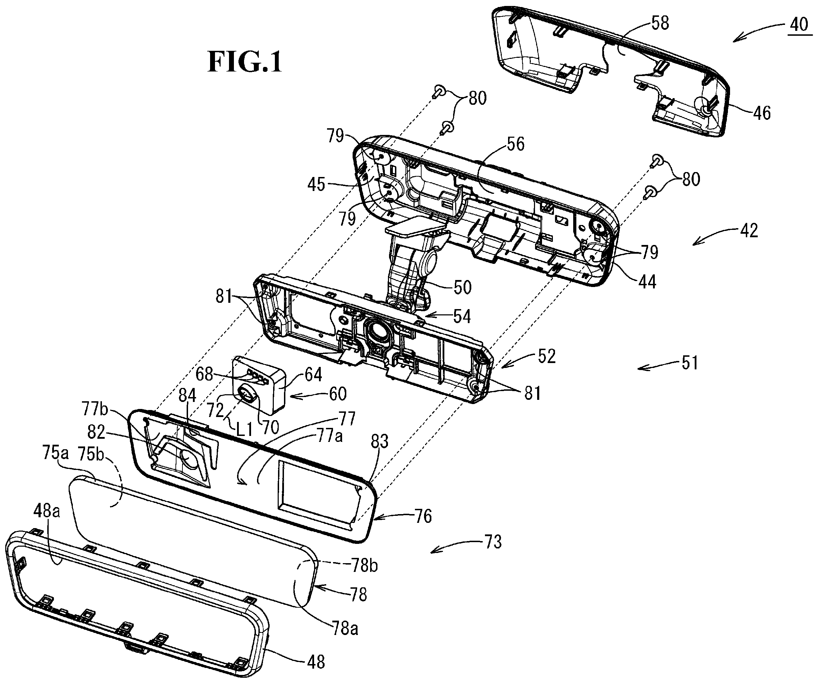

Embodiment 1 of the invention will be described. Here, a mirror holder that holds a mirror element constitutes a back plate. Figure 1 shows an inner mirror 40 according to Embodiment 1 of the invention in a disassembled state. The inner mirror 40 is for a right-hand drive vehicle and designed for monitoring the rear seat (or the rear seat and behind the vehicle). An inner mirror for a left-hand drive vehicle has a configuration bilaterally symmetrical to the inner mirror 40. The inner mirror 40 includes a stay 50, and a mirror body 51. The upper end of the stay 50 is attached to a ceiling surface or a windshield surface at a central position in the left-right direction in the upper part of the front side inside a vehicle cabin. The mirror body 51 is tiltably attached to and supported on the lower end of the stay 50 (that is, such that a mirror angle is adjustable). The mirror body 51 has a housing 42 that constitutes an outer shell, and a support 52, a camera module 60, and a mirror module 73 that are housed in an internal space 45 of the housing 42.

In the mirror body 51, the housing 42 is made of plastic and formed of three components: a body 44, a cover 46, and a ring 48. These three components are assembled to each other by fitting and attaching the cover 46 to the back face of the body 44 by claw engagement and fitting and attaching the ring 48 to the front face of the body 44 by claw engagement, so that the housing 42 is assembled. The support 52 is made of an integrally molded article formed by metal die casting or an integrally molded article of reinforced plastic, and formed in a horizontally elongated plate shape. The support 52 is tiltably coupled, on its back face, to the lower end of the stay 50 through a pivot 54. The back face of the housing 42 has an opening (an opening 56 of the body 44 and an opening 58 of the cover 46) for allowing this coupled portion to pass therethrough.

The camera module 60 is fixed and attached to a position on the left side of the front face of the support 52 with a screw or the like. The camera module 60 has an infrared camera 64, and an infrared lighting device 68 attached to the front face of the infrared camera 64. The infrared lighting device 68 is formed of a plurality of infrared LEDs (here, four infrared LEDs) horizontally arranged in a row with their light emitting surfaces facing forward of the infrared camera 64. A lens barrel 70 protrudes forward from the front face of the infrared camera 64. A lens 72 is attached to an opening at the front end of the lens barrel 70.

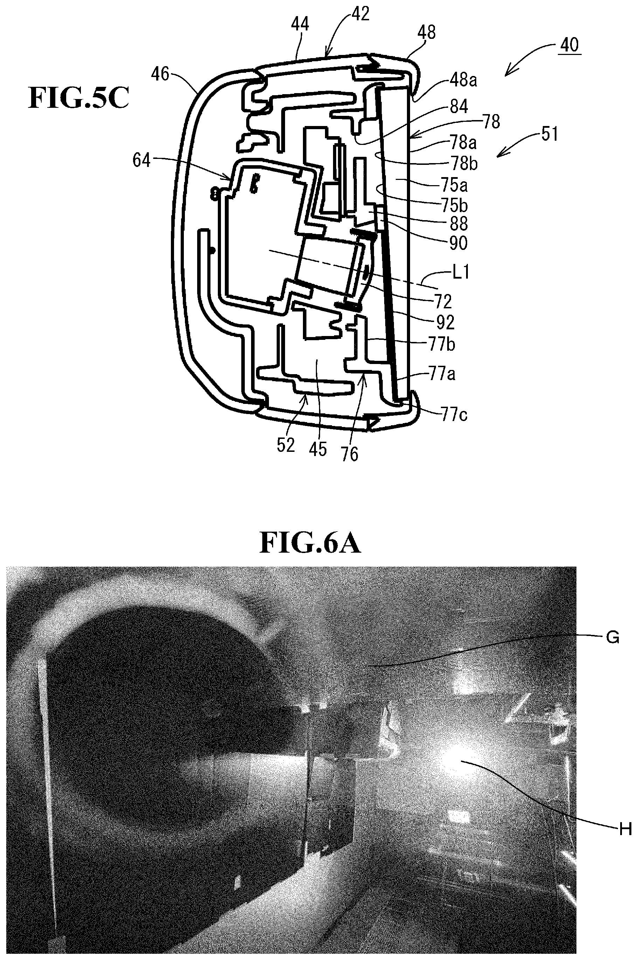

The mirror module 73 is disposed on the front face of the support 52. The mirror module 73 has a configuration in which a mirror element 78 is joined to and held on a front face 77 of a mirror holder 76 with double-sided tape or the like. Here, the mirror holder 76 is made of an integrally molded article of plastic or reinforced plastic. The mirror element 78 is formed of a well-known dielectric multilayer film mirror including a transparent glass substrate 75a and a dielectric multilayer film 75b (the optical thin film having a multilayer structure) deposited on the back face of the transparent glass substrate 75a (the face facing the front face 77 of the mirror holder 76). The mirror element 78 has the optical characteristics of a so-called cold mirror that reflect visible light and transmit infrared light (near-infrared light). In this embodiment, the mirror element 78 is configured as a so-called prism mirror having an antiglare function. Thus, a longitudinal section of the transparent glass substrate 75a perpendicular to the surface has a wedge shape having a thickness that increases toward the upper side and decreases toward the lower side (refer to Figure 5C). The entire mirror body 51 is tilted in the up-down direction relative to the stay 50 to switch the angle of the mirror element 78 in the up-down direction by manual switching operation on a knob (not shown) by a driver. This enables the driver to drive and operate the vehicle while visually recognizing a vehicle-rear reflected image through a mirror surface of the dielectric multilayer film 75b during the daytime. In addition, at night, the driver can drive and operate the vehicle while visually recognizing a non-glare vehicle-rear reflected image through a glass surface of a front face 78a of the mirror element 78. An example of the spectral characteristics of the mirror element 78 is shown in Figure 2. This is the characteristics when the incident angle is 5 degrees. The reflection characteristics are the characteristics of the mirror surface of the dielectric multilayer film 75b. The mirror element 78 is held on the mirror holder 76 by sticking the mirror element 78 onto the mirror holder 76 with double-sided tape or the like with a back face 78b on which the dielectric multilayer film 75b is formed facing the front face 77 of the mirror holder 76.

The inner mirror 40 in Figure 1 is assembled, for example, by the following procedure. The mirror element 78 is stuck onto the front face 77 of the mirror holder 76 with double-sided tape or the like to assemble the mirror module 73. Next, the camera module 60 is attached to a predetermined position on the left side of the front face of the support 52 with a screw or the like. The stay 50 is passed through the opening 56 of the body 44 and the opening 58 of the cover 46, and the support 52 is housed in the internal space 45 of the body 44. The assembled mirror module 73 is put on the front face of the support 52. At this time, the lens barrel 70 of the camera module 60 is inserted, at a shallow depth, into a lens exposure opening 82 formed in the mirror holder 76. The camera module 60 and the mirror holder 76 are not directly coupled to each other. At this time, an optical axis L1 of the lens 72 is disposed tilted slightly outward (in the left direction) and slightly downward relative to the normal direction of a flat surface portion 77a of the front face 77 of the mirror holder 76 when viewed from the driver's view point. In addition, at this time, the four infrared lighting devices 68 are disposed at a position facing an infrared light irradiation window 84 formed in the mirror holder 76. From the back face side of the body 44, four screws 80 are inserted into four through holes 79 formed at the positions of four corners of the body 44, and the screws 80 are screwed into screw holes (not shown) formed in bosses 83 at four corners on the back face of the mirror holder 76 through through holes 81 at the positions of four corners of the support 52. Accordingly, the body 44, the support 52, and the mirror holder 76 with the mirror element 78 attached are assembled to each other while co-fastening the body 44, the mirror holder 76, and the support 52 sandwiched between the body 44 and the mirror holder 76 together. The ring 48 is fitted in the front face of the body 44 and attached thereto by claw engagement, and the cover 46 is fitted in the rear face of the body 44 and attached thereto by claw engagement. An opening 48a of the ring 48 (the opening of the housing 42) is closed with the mirror element 78, and the internal space 45 of the housing 42 is surrounded by the housing 42 and the mirror element 78. In this way, the inner mirror 40 is assembled.

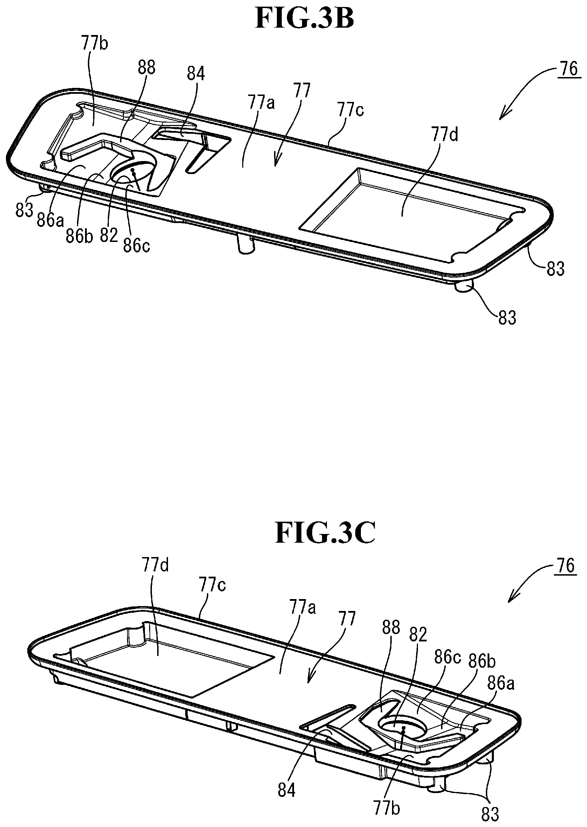

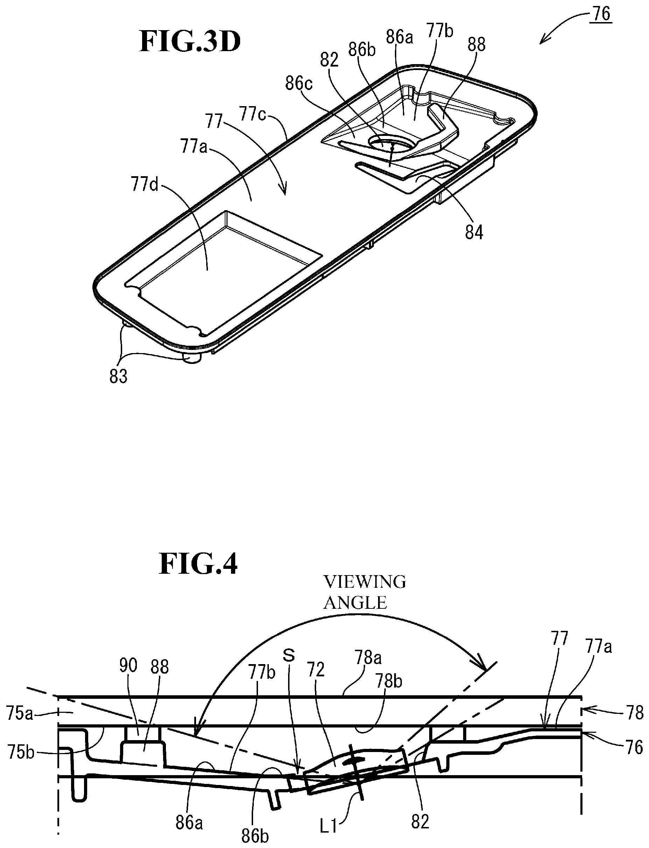

The configuration of the mirror holder 76 will be described with reference to Figures 3A to 3D. The mirror holder 76 is made of an integrally molded article of plastic such as PE, ASA, or PP, or reinforced plastic such as PAGF (glass fiber reinforced nylon resin). The color of each of these materials is a dark color (e.g., black or dark gray). Alternatively, the mirror holder 76 may be formed of an integrally molded article formed by metal die casting or metal pressing with a dark coating on its front face. The dark color of the front face of the mirror holder 76 can make a ghost in a captured image inconspicuous. In addition, by forming the front face of the mirror holder 76 into a rough surface, it is possible to make the ghost even more inconspicuous. The front face 77 of the mirror holder 76 has the flat surface portion 77a, and a recessed surface portion 77b that is recessed relative to the flat surface portion 77a. A low wall 77c is formed around the entire circumference of an outer peripheral edge of the flat surface portion 77a. The entire circumference of the flat surface portion 77a is surrounded by the wall 77c. The mirror element 78 is disposed on the inner peripheral side surrounded by the wall 77c. The wall 77c performs the function of positioning the mirror element 78 with respect to the front face 77 and maintaining the position positioned. In a right area of the front face 77, a recessed shape 77d is formed to prevent warping and bending of the mirror holder 76 and to increase the strength and rigidity of the mirror holder 76. The entire circumference of the recessed shape 77d is surrounded by the flat surface portion 77a. The recessed surface portion 77b is formed in a left area of the front face 77. The entire circumference of the recessed surface portion 77b is surrounded by the flat surface portion 77a. The mirror holder 76 and the mirror element 78 are joined to each other using double-sided tape or the like in almost the entire area of the flat surface portion 77a. In particular, the entire circumference of the outer peripheral part of the flat surface portion 77a surrounded by the wall 77c is joined to the mirror element 78. Since both the recessed surface portion 77b and the recessed shape 77d are disposed on the inner peripheral side of the front face 77 that is surrounded on its entire circumference by the flat surface portion 77a, the entire circumference of the outer peripheral part of the front face 77 of the mirror holder 76 surrounded by the wall 77c is formed of the flat surface portion 77a. Thus, deformation of the mirror holder 76 caused by forming the recessed surface portion 77b and the recessed shape 77d can be restrained by the flat surface portion 77a formed on the entire circumference of the front face 77. In addition, since the entire circumference of the recessed surface portion 77b is closed with the mirror element 78, the entry of dirt, dust, and the like into the recessed surface portion 77b can be restrained.

The recessed surface portion 77b will be described. A cross section of the recessed surface portion 77b (the section taken along a horizontal plane that passes through the center of the lens 72 and is perpendicular to the flat surface portion 77a) has a substantially V-shape (refer to Figures 3B to 3D and 4). A longitudinal section of the recessed surface portion 77b (the section taken along a vertical plane that passes through the center of the lens 72 and is perpendicular to the flat surface portion 77a) has a box shape here (refer to Figure 5C). However, the longitudinal section of the recessed surface portion 77b may also be formed in a substantially V-shape. The recessed surface portion 77b may be formed in a conical shape, a bowl shape, or the like in its entire circumference. The recessed surface portion 77b has a left inclined surface 86a and a right inclined surface 86c due to the V-shape of the cross section. A bottom surface 86b that is curved in a recessed shape in the left-right direction is formed at a valley bottom part between the left and right inclined surfaces 86a, 86c. The bottom surface 86b smoothly connects the left and right inclined surfaces 86a, 86c. If the curved bottom surface 86b is not present and the left and right inclined surfaces 86a, 86c are directly connected at the lower ends of the left and right inclined surfaces 86a, 86c, a "bend" is formed between the lower ends due to the sharp V-shape. As a result, a strong brightness level difference (the light-dark level difference between areas adjacent to each other in one image, that is, a steep brightness gradient) caused by the bend may occur in a ghost in the captured image of the infrared camera 64 (the ghost caused by an image of the internal structure of the inner mirror 40). On the other hand, the bend is eliminated by smoothly connecting the lower ends of the left and right inclined surfaces 86a, 86c through the curved bottom surface 86b. As a result, it is possible to restrain the occurrence of the strong brightness level difference in the ghost of the captured image of the infrared camera 64. When the brightness level difference in the ghost is restrained, even when the ghost occurs, the possibility of mistaking the brightness level difference for a part of an image of a subject is reduced. In addition, since the left and right inclined surfaces 86a, 86c are inclined, a step at the boundary between the recessed surface portion 77b and the flat surface portion 77a in the left-right direction is smaller than that when the left and right inclined surfaces 86a and 86c are not inclined. Thus, it is possible to restrain a ghost image that is caused by the step place and is included in the captured image of the infrared camera 64 from becoming conspicuous. In addition, by rounding the corners of the upper and lower edges of the step at this boundary, it is possible to mitigate the brightness level difference in the ghost image that is caused by the step place and is included in the captured image.

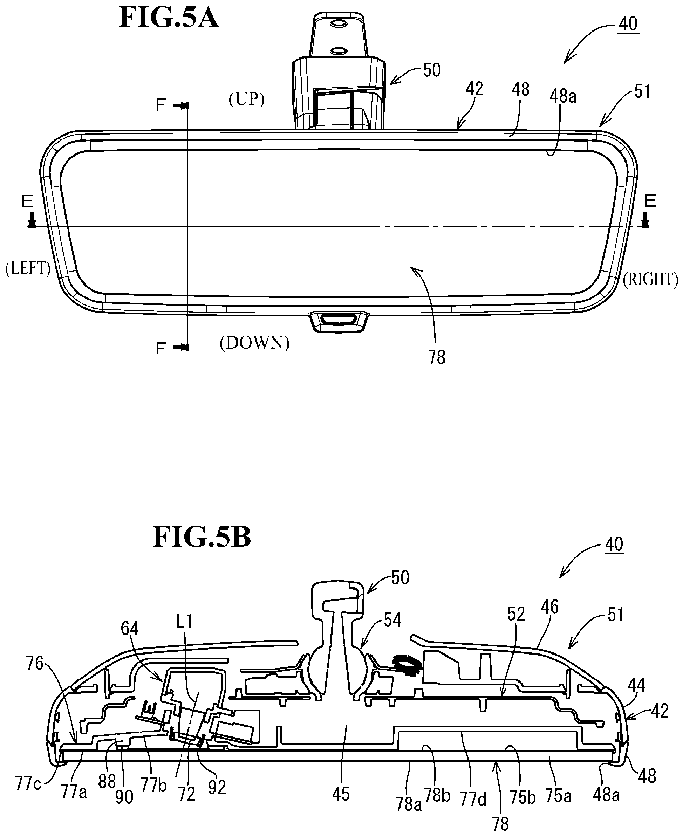

The lens exposure opening 82 is formed from the right inclined surface 86c through the bottom surface 86b. Thus, the lens exposure opening 82 is open facing in a direction that is slightly inclined leftward relative to the normal direction of the flat surface portion 77a, following the right inclined surface 86c. Accompanying the lens exposure opening 82 is inclined in this way, the lens 72 of the infrared camera 64 is disposed with the optical axis L1 tilted slightly leftward relative to the normal direction of the flat surface portion 77a, following the lens exposure opening 82 (refer to Figures 4, 5B). The mirror holder 76 has the infrared light irradiation window 84 that extends in the left-right direction across the recessed surface portion 77b and the flat surface portion 77a at a position above the lens exposure opening 82. The light emitting surfaces of the four infrared lighting devices 68 face the infrared light irradiation window 84 from the back face side of the mirror holder 76. An opening of the infrared light irradiation window 84 bends downward at its right end and further extends downward. The recessed surface portion 77b has a light-shielding wall 88 that is formed in a protruding manner such that the light-shielding wall 88 passes between the lens exposure opening 82 and the infrared light irradiation window 84 and surrounds the lens exposure opening 82. The light-shielding wall 88 is formed to prevent infrared light emitted from the infrared light irradiation window 84 from entering the lens 72 of the infrared camera 64 exposed to the lens exposure opening 82 directly or by being reflected by the back face 78b of the mirror element 78. As necessary, a light-shielding seal 90 (Figure 4) that is made of black sponge or the like is stuck onto a top face of the light-shielding wall 88 to more reliably seal a gap between the top face and the back face 78b of the mirror element 78.

Figure 4 shows an end face of the structure of Figure 3A cut at a D-D arrow position of Figure 3A in a state in which the inner mirror 40 is assembled. In the end view of Figure 4, although the right inclined surface 86c does not clearly appear because an area on the right side of the lens exposure opening 82 is cut at the position of the light-shielding wall 88, the lens 72 of the infrared camera 64 is disposed with the optical axis L1 tilted slightly leftward relative to the normal direction of the flat surface portion 77a, following the right inclined surface 86c. In other words, the lens exposure opening 82 is open in the direction inclined in the tilt direction of the optical axis L1 of the lens 72 relative to the normal direction of the flat surface portion 77a, in the left-right direction among the two directions of up-down and left-right that are perpendicular to the normal direction of the flat surface portion 77a. The recessed surface portion 77b is formed so that a predetermined viewing angle of the infrared camera 64 can be obtained in the left-right direction (that is, so that vignetting of the captured image caused by the recessed surface portion 77b does not occur). In addition, the recessed surface portion 77b is formed so that a predetermined viewing angle of the infrared camera 64 can be obtained also in the up-down direction (may be narrower than that in the left-right direction). If the lens 72 having the optical axis L1 that is tilted relative to the flat surface portion 77a is disposed on the flat surface portion 77a, the step between the lens 72 and the mirror holder 76 (to be precise, the step between an edge of the front face of the lens 72 in the left-right direction and the flat surface portion 77a of the front face 77 of the mirror holder 76) becomes large at the position where the lens 72 faces the lens exposure opening 82. On the other hand, here, since the lens 72 is disposed on the right inclined surface 86c (Figures 3A to 3D) of the recessed surface portion 77b, the right inclined surface 86c being inclined in the same direction as the optical axis L1, at the position where the lens 72 faces the lens exposure opening 82, a step S between the lens 72 and the mirror holder 76 (to be precise, the step between the edge of the front face of the lens 72 in the left-right direction and the recessed surface portion 77b of the front face 77 of the mirror holder 76) (Figure 4) does not become large. Thus, even when strong external light is applied to the inner mirror 40 and a ghost caused by an image of the internal structure of the inner mirror 40 (here, the image of the lens 72 and the front face 77 of the mirror holder 76 around the lens 72) occurs in the captured image of the infrared camera 64, it is possible to restrain a ghost image that is caused by the step place (the place where the step S is present) and is included in the ghost from becoming conspicuous. As a result, the possibility of mistaking the ghost image that is caused by the lens and the step place and is included in the ghost for a part of an image of a subject is reduced. Thus, the visibility of the captured image and the recognition accuracy of the captured image based on image recognition processing can be improved.

The assembled state of the inner mirror 40 of Figure 1 is shown in Figures 5A to 5C. Figure 5A is a front view, Figure 5B is an end view at an E-E arrow position of Figure 5A, and Figure 5C is an end view at an F-F arrow position of Figure 5A. Here, the light-shielding seal 90 made of black sponge or the like is stuck onto the top face of the light-shielding wall 88 to more reliably seal the gap between the top face and the back face 78b of the mirror element 78. In addition, a bandpass filter 92 that transmits a wavelength range corresponding to the sensitivity wavelength of the infrared camera 64 (e.g., near-infrared light with wavelengths of 900 nm to 1000 nm) is stuck onto the back face 78b of the mirror element 78 in an area surrounded by the light-shielding wall 88. By providing the bandpass filter 92, a captured image with a clear shape of a subject can be obtained. In this embodiment, as shown in Figure 5C, the optical axis L1 of the infrared camera 64 is disposed tilted slightly downward relative to the normal direction of the recessed surface portion 77b of the front face 77 of the mirror holder 76 in the up-down direction. In addition, as shown in Figure 5C, the recessed surface portion 77b of the front face 77 of the mirror holder 76 is disposed parallel to the front face 78a of the mirror element 78 in the up-down direction. However, also in the up-down direction as with the left-right direction, the recessed surface portion 77b may be formed to have an inclined surface that is inclined relative to the normal direction of the flat surface portion 77a, following the tilt of the optical axis L1 in the up-down direction. Alternatively, the recessed surface portion 77b may be formed as a conical surface or a bowl surface in its entire circumference. In this way, by making the lens exposure opening 82 open in the direction inclined in the tilt direction of the optical axis L1 of the lens 72 in both the up-down and left-right directions (ideally, forming the lens exposure opening 82 such that a plane to which the lens exposure opening 82 belongs is perpendicular to the optical axis L1), the step S (Figure 4) between the lens 72 and the mirror holder 76 can be made small in the entire circumference of the lens exposure opening 82.

The inner mirror 40 shown in Figures 5A to 5C is used as follows in a state in which the inner mirror 40 is installed on the windshield or the ceiling inside the vehicle cabin. The driver manually tilts the mirror body 51 relative to the stay 50 to adjust the mirror element 78 to a mirror angle that enables the driver to visually recognize the rear side of the vehicle. At this time, the optical axis L1 of the infrared camera 64 is generally tilted slightly downward relative to the vehicle-rear horizontal direction, and the infrared camera 64 can capture the rear seat (or the rear seat and behind the vehicle) in its field of view. Since the viewing angle of the infrared camera 64 is set with a certain margin also in the up-down direction, even when the mirror body 51 is tilted in the up-down direction by switching between a non-antiglare mode and an antiglare mode, the infrared camera 64 can capture the rear seat (or the rear seat and behind the vehicle) in its field of view. With the mirror surface angle adjusted, the driver can drive and operate the vehicle while checking the state of the rear side of the vehicle using a reflected image of the mirror element 78 (the reflected image by the dielectric multilayer film 75b in the non-antiglare mode, and the non-glare reflected image by the glass surface of the front face 78a of the mirror element 78 in the antiglare mode). When monitoring of the rear seat (or the rear seat and behind the vehicle) is performed, an on/off switch of a monitoring device provided with the infrared camera 64 and the infrared lighting device 68 is turned on. This actuates the infrared camera 64 and the infrared lighting device 68. As a result, the infrared lighting device 68 emits infrared light (near-infrared light), and the infrared camera 64 starts photographing. The infrared light emitted from the infrared lighting device 68 passes through the infrared light irradiation window 84 of the mirror holder 76, passes through the mirror element 78, and is radiated into an external space of the housing 42 toward the rear seat. An image of a scene (subject) including the rear seat illuminated by the infrared light passes through the mirror element 78 and is captured by the infrared camera 64. A captured image signal is, for example, displayed on a display installed in the driver's seat. The driver can drive while monitoring the state of an occupant in the rear seat or the like by watching the displayed image. In addition, the captured image signal may be recorded on a drive recorder.

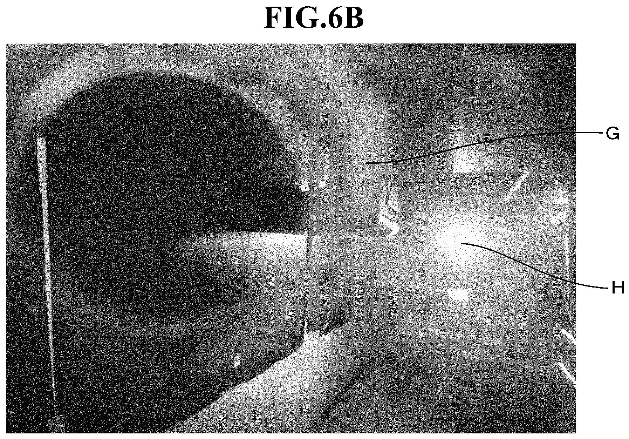

The image captured by the infrared camera 64 will be described. Figure 6A shows a captured image of the infrared camera 64 when external light of a halogen lamp H is applied to the inner mirror 40 from the front thereof. Figure 6B shows a captured image of the infrared camera 64 when external light of the halogen lamp H is applied to the inner mirror 40 from the front thereof in a comparative example in which the recessed surface portion 77b of the front face 77 of the mirror holder 76 of the inner mirror 40 has a box shape throughout the entire circumference (the shape that has no inclined surface and has a bottom surface entirely formed of a flat surface parallel to the flat surface portion 77a). In both Figure 6A (Embodiment 1) and Figure 6B (comparative example), since the external light applied to the inner mirror 40 passes through the mirror element 78 and is applied to the front face 77 of the mirror holder 76, and the external light reflected by the mirror holder 76 is reflected by the mirror surface of the dielectric multilayer film 75b on the back face 78b of the mirror element 78 and received by the infrared camera 64, a ghost caused by an image of the front face 77 of the mirror holder 76 occurs in the captured image. In particular, in Figure 6B (comparative example), a ghost image G (white blur) caused by a step place between the lens 72 and the mirror holder 76 (here, the bottom surface of the recessed surface portion 77b having no inclined surface) strongly appears at the edge position of the lens 72 in the left-right direction. On the other hand, in Figure 6A (Embodiment 1), since the step S (Figure 4) between the lens 72 and the mirror holder 76 (here, the recessed surface portion 77b formed of the inclined surface) is smaller than that in the comparative example at the edge position of the lens 72 in the left-right direction, the ghost image G caused by the step place is inconspicuous. Thus, according to Figure 6A (Embodiment 1), as compared to Figure 6B (comparative example), it is possible to reduce the possibility of mistaking the ghost image G that is caused by the step place and is included in the ghost for a part of an image of a subject. As a result, the visibility of the captured image and the recognition accuracy of the captured image based on image recognition processing can be improved.

### <<Embodiment 2>>

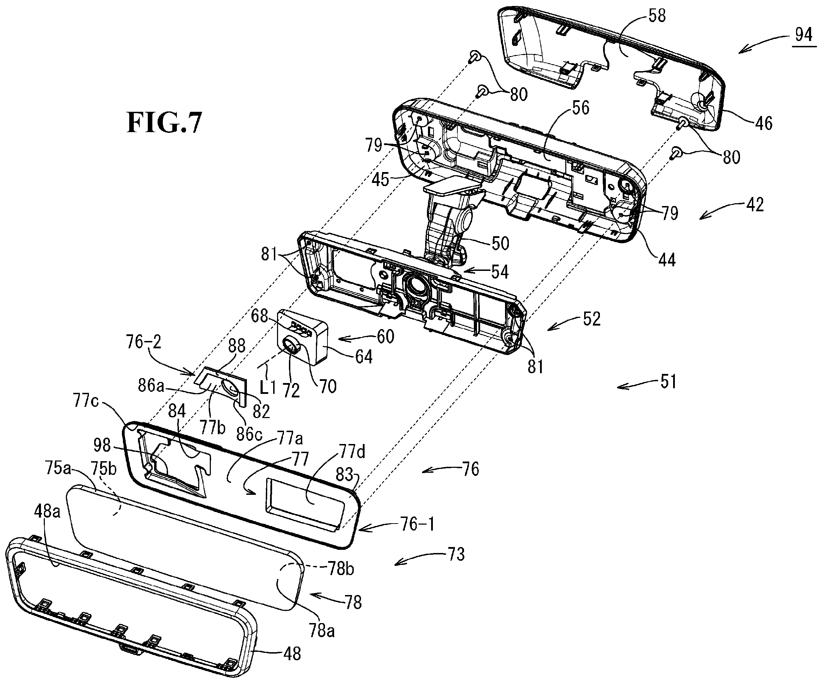

Embodiment 2 of the invention will be described. Figure 7 shows an inner mirror 94 according to Embodiment 2 of the invention in a disassembled state. The inner mirror 94 is one in which the mirror holder 76 (back plate) of the inner mirror 40 of Embodiment 1 has a divided structure. The other configuration is the same as that of the inner mirror 40 of Embodiment 1. In Embodiment 2, the same reference signs are used for parts that are common with Embodiment 1, and the description thereof will be omitted.

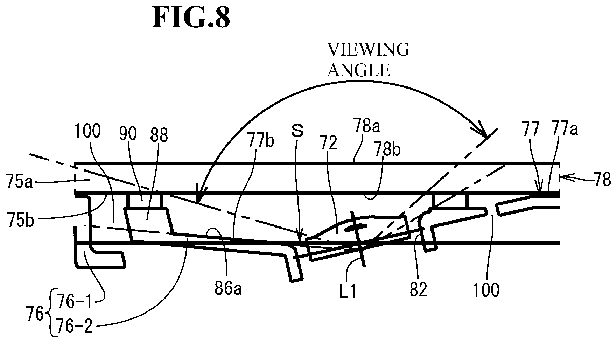

In Figure 7, the mirror holder 76 is divided into a mirror holder main body 76-1 and a recessed surface portion constituting piece 76-2. The recessed surface portion constituting piece 76-2 is attached to the front face of the camera module 60 with double-sided tape, an adhesive, or the like. The mirror holder main body 76-1 has an opening 98 that is formed corresponding to the shape of the recessed surface portion constituting piece 76-2. When the inner mirror 94 is assembled, the recessed surface portion constituting piece 76-2 is fitted into the opening 98 of the mirror holder main body 76-1 without leaving a large gap. Figure 8 shows an end face of the mirror holder 76 in an assembled state, cut at a position corresponding to the cut position of the end view of Figure 4 of Embodiment 1 (the position corresponding to the D-D arrow position of Figure 3A). A recessed surface portion 77b of Embodiment 2 has substantially the same surface shape as the recessed surface portion 77b of Embodiment 1. Although, in Figure 8, a gap 100 between the mirror holder main body 76-1 and the recessed surface portion constituting piece 76-2 is left as it is, the gap 100 may be closed with an adhesive or paint having a dark color (e.g., black or dark gray).

### <<Embodiment 3>>

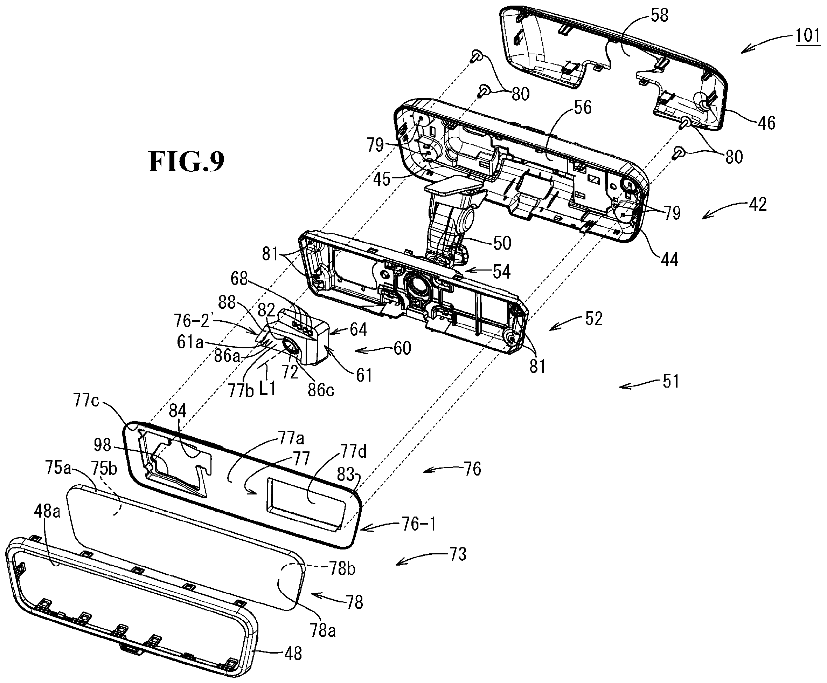

Embodiment 3 of the invention will be described. Figure 9 shows an inner mirror 101 according to Embodiment 3 of the invention in a disassembled state. The inner mirror 101 is configured such that the recessed surface portion constituting piece 76-2 is integrated with a front part of a case of the camera module 60 in the inner mirror 94 of Embodiment 2, in other words, configured such that the recessed surface portion constituting piece 76-2 also serves as the front part of the case of the camera module 60. The other configuration is the same as that of the inner mirror 94 of Embodiment 2. In Embodiment 3, the same reference signs are used for parts that are common with Embodiment 2, and the description thereof will be omitted.

In Figure 9, a recessed surface portion constituting piece 76-2' is integrated with a front part 61a of a case 61 (camera case of the infrared camera 64) of the camera module 60 by integral molding, the case 61 being made of plastic or reinforced plastic. A mirror holder main body 76-1 has an opening 98 that is formed corresponding to the shape of the recessed surface portion constituting piece 76-2'. When the inner mirror 101 is assembled, the recessed surface portion constituting piece 76-2' is fitted into the opening 98 of the mirror holder main body 76-1 without leaving a large gap. At this time, a recessed surface portion 77b and a lens 72 are disposed in the same state as in Figure 8 according to Embodiment 2. As necessary, a light-shielding seal (same as the light-shielding seal 90 of Figure 8) that is made of black sponge or the like is stuck onto a top face of a light-shielding wall 88 of the recessed surface portion constituting piece 76-2'. A gap (same as the gap 100 of Figure 8) between the mirror holder main body 76-1 and the recessed surface portion constituting piece 76-2' is left as it is, or may be closed with an adhesive or paint having a dark color (e.g., black or dark gray) as necessary.

### <<Embodiment 4>>

Embodiment 4 of the invention is shown in Figure 10. This is one in which the invention is applied to the conventional configuration shown in Figure 11. This inner mirror 102 is configured to enable the state of a driver to be monitored. In Embodiment 4, the same reference signs are used for parts that are common with Figure 11. Here, a substrate 16 constitutes the back plate. In the inner mirror 102, a mirror element 26 has the optical characteristics of a so-called cold mirror that reflect visible light and transmit infrared light (near-infrared light). The mirror element 26 is held on a ring 28 that constitutes the front part of a housing 12 and attached to the front face of the housing 12. Accordingly, an opening 32 of the front face of the housing 12 is closed with the mirror element 26. In an internal space 34 of the housing 12, the substrate 16 is installed facing the back face of the mirror element 26 behind the mirror element 26. The substrate 16 in a position parallel to the mirror element 26 is supported, with screws, by a plurality of bosses 36 provided in a protruding manner on the inner peripheral face of the housing 12. The substrate 16 does not have the function of a mirror holder that holds the mirror element 26. A front face 17 of the substrate 16 has a flat surface portion 17a that is disposed parallel to the plate face of the mirror element 26, and a recessed surface portion 17b that is recessed relative to the flat surface portion 17a. The recessed surface portion 17b may be formed, for example, in a conical shape or a bowl shape in its entire circumference. An inclined surface 19 of the recessed surface portion 17b, the inclined surface 19 being inclined relative to the flat surface portion 17a, has a through hole that constitutes a lens exposure opening 18. An infrared camera 20 is mounted on the back face of the substrate 16, and an infrared lighting device 24 using infrared LEDs is mounted on the front face of the substrate 16. A lens 22 of the infrared camera 20 is exposed through the lens exposure opening 18 and faces the back face of the mirror element 26. The lens 22 of the infrared camera 20 is disposed with the optical axis L1 tilted relative to the normal direction of the flat surface portion 17a such that the optical axis L1 faces in the direction of the face of the driver, following the inclined surface 19 in which the lens exposure opening 18 is formed. A light-shielding member 30 surrounding the recessed surface portion 17b is sandwiched between the mirror element 26 and the substrate 16. The light-shielding member 30 prevents a flare (white blur) in the captured image, the flare being caused by infrared light emitted from the infrared lighting device 24 entering the lens 22 of the infrared camera 20 directly or by being reflected by the mirror element 26. The infrared light emitted from the infrared lighting device 24 passes through the mirror element 26 and is applied to the face of the driver. An image of the face of the driver illuminated by the infrared light passes through the mirror element 26 and is captured by the infrared camera 20. The state of the driver is monitored based on the captured image.

With the inner mirror 102 of Figure 10, since the lens 22 is disposed on the inclined surface 19 of the recessed surface portion 17b, the inclined surface 19 being inclined in the same direction as the optical axis L1, a step S between the lens 22 and the substrate 16 (the step between an edge of the lens 22 in the left-right direction and the recessed surface portion 17b) does not become large. Thus, even when strong external light is applied to the inner mirror 102 and a ghost caused by an image of the internal structure of the inner mirror 102 (here, the image of the lens 22 and the front face 17 of the substrate 16 around the lens 22) occurs in the captured image of the infrared camera 20, it is possible to restrain a ghost image that is caused by the step place (the place where the step S is present) and is included in the ghost from becoming conspicuous. As a result, since the possibility of mistaking the ghost image that is caused by the lens and the step place and is included in the ghost for a part of the image of the subject is reduced, the visibility of the captured image and the recognition accuracy of the captured image based on image recognition processing can be improved.

Note that, although the mirror element 26, 78 of each of the above embodiments is formed of a plane mirror, the mirror element 26, 78 may be formed of a convex mirror. When the mirror element 26, 78 is formed of a convex mirror, the back plate 16, 76 may be formed of a flat plate or a convex plate that follows the convex surface of the mirror element 26, 78. In addition, although, in the each of the above embodiments, the infrared lighting device 24, 68 emits infrared light such that the infrared light passes through the mirror element 26, 78, the infrared lighting device 24, 68 may be configured to emit infrared light such that the infrared light does not pass through the mirror element 26, 68. In addition, although, in Embodiments 1 to 3 described above, the infrared camera 64 is attached to and supported by the support 52, alternatively, the infrared camera 64 may be directly attached to and supported by the housing 42. In addition, although, in Embodiment 1 described above, the infrared camera 64 is attached to and supported by the support 52, alternatively, the infrared camera 64 may be attached to and supported by the mirror holder 76. In addition, although, in Embodiments 1 to 3 described above, the mirror element 78 is attached to and supported by the body 44 side of the housing 42, alternatively, as with Embodiment 4, the mirror element 78 may be attached to and supported by the ring 48 side of the housing 42.

### Reference Signs List

12...housing, 16...substrate (back plate), 17...front face of substrate, 17a...flat surface portion, 17b...recessed surface portion, 18...lens exposure opening, 19...inclined surface inclined relative to flat surface portion, 20...infrared camera, 22...lens, 24...infrared lighting device, 26...mirror element, 28...ring, 30...light-shielding member, 32...opening of front face of housing, 34...internal space of housing, 36...boss, 40...inner mirror with built-in camera, 42...housing, 44...body, 45...internal space of housing, 46...cover, 48...ring, 48a...opening of ring (opening of front face of housing), 50...stay, 51...mirror body, 52...support, 54...pivot, 56...opening of back face of body, 58...opening of back face of cover, 60...camera module, 61...case of camera module, 61a...front part of case of camera module, 64...infrared camera, 68...infrared lighting device, 70...lens barrel, 72...lens, 73...mirror module, 75a...transparent glass substrate, 75b...dielectric multilayer film, 76...mirror holder (back plate), 76-1...mirror holder main body, 76-2...recessed surface portion constituting piece, 76-2'...recessed surface portion constituting piece integrated with front part of case of camera module, 77...front face of mirror holder, 77a...flat surface portion, 77b...recessed surface portion, 77c...wall, 77d...recessed shape, 78...mirror element, 78a...front face of mirror element (plate face of mirror element), 78b...back face of mirror element (plate face of mirror element), 79...through hole, 80...screw, 81...through hole, 82...lens exposure opening, 83...boss, 84...infrared light irradiation window, 86a...left inclined surface, 86b...curved bottom surface, 86c...right inclined surface, 88...light-shielding wall, 90...light-shielding seal, 92...bandpass filter, 94...inner mirror with built-in camera, 98...opening of mirror holder main body, 100...gap between mirror holder main body and recessed surface portion constituting piece, 101...inner mirror, 102...inner mirror, L1...optical axis of lens of infrared camera, H...halogen lamp, G...ghost image caused by step place between lens of infrared camera and back plate at lens exposure opening, S...step between lens of infrared camera and back plate at lens exposure opening

## Claims

1. An inner mirror structure with a built-in camera comprising:
a housing;
a mirror element that has optical characteristics of reflecting visible light and transmitting infrared light, and is disposed at a position where the mirror element closes an opening of a front face of the housing;
a back plate that is housed in an internal space of the housing surrounded by the housing and the mirror element, and is disposed facing a back face of the mirror element behind the mirror element; and
an infrared camera that is disposed at a position behind the back plate in the internal space of the housing, has a lens exposed toward the back face of the mirror element through a lens exposure opening formed in the back plate, and receives infrared light that passes through the mirror element and enters the infrared camera, wherein
a front face of the back plate has a flat surface portion disposed parallel to a plate face of the mirror element, and a recessed surface portion recessed relative to the flat surface portion,
at least a part of the lens exposure opening is formed in an inclined surface of the recessed surface portion, the inclined surface being inclined relative to the flat surface portion, and
the lens of the infrared camera is disposed with an optical axis tilted relative to a normal direction of the flat surface portion, following the lens exposure opening.

2. The inner mirror structure with a built-in camera according to claim 1, wherein the back plate has a configuration in which an entire circumference of the recessed surface portion is surrounded by the flat surface portion.

3. The inner mirror structure with a built-in camera according to claim 1, wherein the back plate is configured as a component in which the flat surface portion and the recessed surface portion are integrally formed.

4. The inner mirror structure with a built-in camera according to claim 1, wherein the back plate is configured as a combination of the flat surface portion and the recessed surface portion that are separate components.

5. The inner mirror structure with a built-in camera according to claim 4, wherein the component constituting the recessed surface portion is formed of a component separate from a component constituting a front part of a case of the infrared camera and attached to the front part of the case of the infrared camera.

6. The inner mirror structure with a built-in camera according to claim 4, wherein the component constituting the recessed surface portion is integrated with a component constituting a front part of a case of the infrared camera.

7. The inner mirror structure with a built-in camera according to any one of claims 1 to 6, wherein the back plate constitutes a mirror holder that holds the mirror element.

8. The inner mirror structure with a built-in camera according to claim 7, wherein the mirror element and the back plate are joined to each other at the flat surface portion.

9. The inner mirror structure with a built-in camera according to any one of claims 1 to 6, wherein the back plate constitutes a substrate on which the infrared camera is mounted, and the substrate does not constitute a mirror holder that holds the mirror element.

10. The inner mirror structure with a built-in camera according to any one of claims 1 to 6, further comprising
a support that is disposed facing a back face of the back plate behind the back plate in the internal space of the housing and attached to the housing, wherein
the infrared camera is attached to the support.

11. The inner mirror structure with a built-in camera according to any one of claims 1 to 6, further comprising an infrared lighting device that is housed in the internal space of the housing and emits infrared light toward the back face of the mirror element to allow the infrared light to pass through the mirror element and radiate into an external space of the housing, wherein the infrared lighting device is disposed behind the back plate and emits the infrared light toward the back face of the mirror element through an irradiation window formed in the back plate.
